Europäisches Patentamt

European Patent Office

Office européen des brevets

(19)

(11) **EP 0 596 853 B1**

(12) **EUROPÄISCHE PATENTSCHRIFT**

(45) Veröffentlichungstag und Bekanntmachung des Hinweises auf die Patenterteilung:
**26.03.1997 Patentblatt 1997/13**

(51) Int Cl.6: **D07B 7/12**

(21) Anmeldenummer: **93890203.8**

(22) Anmeldetag: **19.10.1993**

(54) **Verfahren und Vorrichtung zur Schmierung von Drahtseilen**

Method and device for lubricating wire ropes

Procédé et dispositif pour le graissage des câbles métalliques

(84) Benannte Vertragsstaaten:
**BE CH DE DK ES FR GB GR IT LI LU NL PT SE**

(30) Priorität: **22.10.1992 AT 2092/92**

(43) Veröffentlichungstag der Anmeldung:
**11.05.1994 Patentblatt 1994/19**

(73) Patentinhaber: **VOEST-ALPINE AUSTRIA DRAHT GmbH**
**8600 Bruck a.d. Mur (AT)**

(72) Erfinder: **Zimmermann, Karl, Ing.**
**A-1100 Wien (AT)**

(74) Vertreter: **Brauneiss, Leo, Dipl.Ing. et al**
**Patentanwälte Dipl.-Ing. Leo Brauneiss**
**Dipl.-Ing. Dr. Helmut Wildhack**
**Dipl.-Ing Gerhard Jellinek**
**Landstrasser Hauptstrasse 50**
**Postfach 281**
**1031 Wien (AT)**

(56) Entgegenhaltungen:
**CA-A- 1 265 672          GB-A- 612 180**
**GB-A- 790 551**

**Beschreibung**

Die Erfindung betrifft ein Verfahren zur Schmierung von Drahtseilen, bestehend aus mehreren im wesentlichen einen gerundeten oder kreisförmigen Querschnitt aufweisenden, vorzugsweise aus mehreren Drähten gebildeten Litzen, die in Längsrichtung schraubenförmig einander benachbart unter Ausbildung von oberflächennahen Litzenzwickeln um einen Kern angeordnet sind, bei welchem Verfahren das Drahtseil in einem Schmierungsbereich in Längsrichtung relativ zu diesem bewegt und mit einem Schmiermittel beaufschlagt wird.

Weiters bezieht sich die Erfindung auf Vorrichtungen zur Schmierung von Drahtseilen nach dem Oberbegriff des Anspruches 9.

Drahtseile sind Trage- und Spannelemente mit hoher Biegefähigkeit und werden in der Verbindungs- sowie in der Förder- und Beförderungstechnik, zum Beispiel für Seilbahnen, Aufstiegshilfen und dergleichen, eingesetzt. Eine leichte Biegbarkeit bei hoher Zugfestigkeit von Seilen wird durch deren inneren Aufbau erreicht. Im Querschnitt bestehen Seile aus einer Anzahl von Litzen, welche ihrerseits aus zumeist einer Vielzahl von hochfesten Drähten gebildet sind. Bei einer Biegung mit zulässigen kleinen Radien erfolgen bei einer elastischen Verformung der einzelnen Seildrähte auch Verschiebungen von benachbarten Drähten und dabei gegebenenfalls Änderungen der Querschnittsform des Drahtseiles. Diese Verschiebungen der Drähte an vielen Berührungsflächen und der in Achsrichtung wirkende Druck begründen die innere Reibung von Seilen.

Um diese innere Reibung klein zu halten und somit eine hohe Flexibilität bei geringem Verschleiß zu erreichen, werden Seile zumeist schon bei der Erzeugung bzw. Verseilung geschmiert, d.h. zwischen den Drähten wird Schmiermittel, welches auch einen gewissen Korrosionsschutz darstellt, eingelagert. Im Zuge der Verwendung der Seile, insbesondere im Freien, ist ein Schmiermittelverbrauch gegeben, so daß zur Vermeidung von Verschleiß und Seilbrüchen Nachschmierungen erforderlich sind, durch die eine Regenerierung der Grundschmierung erfolgt. Die wichtigsten Ziele bei einer Nachschmierung sind, einerseits ein tiefes Eindringen des Schmiermittels in das Innere des Litzenseiles zu erreichen, um die innere Seilreibung zu verringern und den Korrosionsschutz zu verbessern, jedoch andererseits die oberflächennahe Zone des Drahtseiles möglichst frei von Schmiermittel zu halten, damit eine möglichst hohe Reibung zwischen Seil und treibender Seilscheibe gegeben ist und an Seilrollen keine ungewünschten Schmierstoffablagerungen und Beschädigungn entstehen können.

Aus der CA-A-1265672 ist eine Vorrichtung bekannt, Drahtseile durchdringend mit flüssigen Stoffen, insbesondere Schmierölen, zu beaufschlagen. Um eine verdreckungsarme, robuste, leicht anwendbare und kostengünstige Anlage zu erhalten, wird vorgeschlagen, ein Gehäuse, durch welches das Seil geführt wird, einzusetzen und im Gehäuse das Seil mit Flüssigkeit bzw. Schmieröl zu besprühen. Dabei soll durch gegen die Drahtseiloberfläche gerichtete Druckluftstrahlen die überschüssige Flüssigkeit vom Seil abgetragen und durch einen Auslaß aus dem Gehäude ausgebracht werden.

Bei den bisher bekannten Verfahren und Vorrichtungen zur Schmierung von Seildrähten können entweder die vorhin angeführten Ziele nicht gleichzeitig erreicht werden oder es sind aufwendige komplizierte Geräte bzw. Anlagen oft mit einer Mehrzahl von Verfahrensschritten dafür erforderlich.

Hier will die Erfindung Abhilfe schaffen und stellt sich die Aufgabe, die Nachteile der bekannten Seilschmierungsarten zu beseitigen und ein neues verbessertes Verfahren zur Schmierung von Drahtseilen anzugeben.

Ferner ist es Aufgabe der Erfindung, Vorrichtungen zu schaffen, mit welchen auf einfache Weise eine Schmierung der Litzenseilinnenzonen ohne Schmiermittelbeaufschlagung des Oberflächenbereiches des Drahtseiles erfolgen kann.

Die Aufgabe wird erfindungsgemäß bei einem Verfahren der eingangs genannten Art dadurch gelöst, daß im Schmierungsbereich die Oberfläche des sich bewegenden Drahtseiles örtlich durch mehrere geringe Durchmesser aufweisende, diskontinuierlich sprühende bzw. ausgebildete Schmiermittelstrahlen derart gesteuert wird, daß nur dann Schmiermittelstrahlen, welche eine hohe kinetische Energie aufweisen, ausgebildet bzw. aktiviert werden, wenn deren Auftreffpunkt oder Auftrefflinie im Bereich eines Spaltes zwischen benachbarten Litzen im Litzenwinkel am bewegten Drahtseil zu liegen kommt. Die durch die Erfindung erreichten Vorteile sind im wesentlichen darin zu sehen, daß das Schmiermittel bei geringem Verbrauch, bezogen auf eine Seillänge, besonders tief in Richtung Seilachse zwischen die Seildrähte eindringt, weil, wie gefunden wurde, ein geringer Durchmesser und eine Zylinderform des Schmiermittelstrahles dessen spezifische Durchwirkung erhöhen und durch ein diskontinuierliches und damit pulsierendes Auftreffen des Strahles auf Seilkomponenten im Bereich eines Litzenzwickels besonders vorteilhafte Eindringkriterien geschaffen werden. Dabei kann gegebenenfalls auch ein Austrag von Wasserund/ oder verbrauchtem Schmiermittel in Partikelform aus dem Seilinneren erfolgen.

Wenn weiters in günstiger Weise vorgesehen, zur Steuerung der Zeitpunkte einer Ausbildung und gegebenenfalls einer Abschaltung der Schmiermittelstrahlen am bewegten Drahtseil in einer Meßebene im wesentlichen quer zur Seilachse durch Vermessen oder Abtasten des Oberflächenprofiles, einer Litzenflanke oder dergleichen Kennmarken die jeweils momentane Lage mindestens eines Litzenzwickels festgestellt und damit unter Berücksichtigung der Seilgeometrie, insbesondere des Schlagwinkels, und der Anzahl der Litzen sowie gegebenenfalls des Abstands zur Meßebene die jeweils gegebene Lage der größten Annäherung der Litzen des Drahtseiles im Schmierungsbereich ermittelt wird, wobei jene Schmiermittelstrahlen ausgebildet bzw. aktiviert werden, deren Auftreffpunkt im durch die Seilbewegung und den Schlagwinkel relativ zu diesem bewegten Litzenzwickel zu liegen kommt, ist eine besonders genaue und durch hohe Wirtschaftlichkeit und geringe Umweltbelastung aufweisende Seilschmierung ermöglicht.

Bevorzugt wird die Meßebene mit einem Abstand zum Schmierungsbereich, insbesondere diesem in Richtung der Drahtseilbewegung vorgeordnet, weil dadurch einerseits ein besonders genaues Feststellen der Lage eines Litzenzwickels oder einer Litzenflanke an der Seiloberfläche möglich ist, andererseits eine Beeinträchtigung eines Abtastverfahrens oder gegebenenfalls eine Beaufschlagung des Abtastmittels mit Drahtseilschmiermittel vermieden wird.

Ein tiefes Eindringen in das Seilinnere wird erreicht, wenn weitgehend zylindrische Schmiermittelstrahlen, vorzugsweise mit einem Druck von größer als 25 bar, gebildet werden. Das Eindringen und auch eine innere Verteilung in Achsrichtung kann weiter gefördert werden, wenn die zur Erstellung des Schmiermittelstrahles verwendeten Düsen von einer Ruheposition jeweils zur oder bei Ausbildung des Strahles in den Litzenzwickel hinein bewegt bzw. dem Bereich der größten Annäherung der Litzen angenähert werden. Damit wird erreicht, daß die Energie des Strahles vergrößert und dessen Auftrefffläche präzisiert werden, was bei guter Innenschmierung ein im wesentlichen gesichertes Vermeiden einer Schmiermittelauftragung im Bereich der Seildrahtoberfläche erbringt.

Insbesondere im Hinblick auf eine über lange Zeit besonders gut wirkende Innnenschmierung von Seilen, die gegebenenfalls zusätzlichen Beanspruchungen durch deren Verwendung im Freien ausgesetzt sind, hat es sich als vorteilhaft herausgestellt, wenn ein Schmiermittel mit einem Tropfpunkt von höher als 40 °C, vorzugsweise von höher als 60 °C, verwendet und vor dem Einsatz auf eine um mindestens 15°C, insbesondere um etwa 35 °C, über der Tropfpunkttemperatur liegenden Temperatur erwärmt und für die Erstellung dünnflüssiger Schmierstrahlen benutzt wird. Dadurch wird ein leichtes Eindringen des erwärmten Schmiermittels in die Zwischenräume zwischen den Seildrähten wegen dessen Dünnflüssigkeit gefördert und nach Abkühlung im Seilinneren unter den Tropfpunkt ein Auslaufen verhindert.

Anwendungstechnisch, jedoch auch hinsichtlich einer freien von einer elektrischen Stromversorgung unabhängigen Wahl der Stelle der Schmierung im Verlauf des Seiles kann es günstig sein, wenn ein Abtasten des Oberflächenpofiles, insbesondere mindestens einer Litzenflanke, in der Meßebene mechanisch durchgeführt wird und daß eine Schmiermittelstrahlbildung und/oder eine Steuerung der Ausbildung von Schmiermittelstrahlen von der Bewegung der(des) Tastmittel(s) bewerkstelligt werden(wird).

Eine besonders leichte Ausführungsform und ein hoher Automatisierungsgrad der Anlage kann erreicht werden, wenn die Vermessung des Oberflächenprofiles zur Bestimmung der jeweiligen Lage mindestens eines Litzenzwickels in der Meßebene durch einen Sensor, beispielsweise einen Radar- oder optoelektronischen Sensor, bewerkstelligt wird und die Signale einer programmierbaren elektronischen Rechen - und Steuereinheit zugeführt werden, durch welche die Ausbildung von Schmiermittelstrahlen gesteuert wird.

Eine weitere Aufgabe der Erfindung wird bei einer Vorrichtung zum Schmieren von Drahtseilen, wobei diese in Längsrichtung des Seiles relativ zu diesem bewegbar ist und Einrichtungen zur Beaufschlagung der Drahtseiloberfläche mit Schmiermittel aufweist, gelöst, daß im Bereich des Drahtseiles ein Halteteil mittels einer Halterung feststellbar angeordnet ist, welches Halteteil Düsenbefestigungen mit Düsen trägt, die über Schmiermitteldruckleitungen mit einer für eine jeweilige Schmiermittelbeaufschlagung geeignete Steuereinheit verbunden sind und in einem Abstand, bezogen auf die Bewegungsrichtung des Seiles, dem Schmierungsbereich ein Sensor zur Vermessung mindestens eines Teiles des jeweiligen Oberflächenprofiles am bewegten Drahtseil vorgeordnet ist, wobei der Sensor und die Steuereinheit verbunden sind.

Die mit der Erfindung erzielten Vorteile bestehen insbesondere darin, daß eine gezielte Beaufschlagung von bestimmten Stellen der Oberfläche eines Drahtseiles auf einfache Weise erreicht wird.

Eine besonders wirkungsvolle mechanische Ausführungsform der Erfindung wird erreicht, wenn das Halteteil als Gehäuse ausgebildet ist, in welchem um das Drahtseil ein teilbarer Drehkörper mit einer Zahnscheibe und mit mindestens einem an mindestens einer Litze anlegbaren Führungsrad, wodurch ein jeweiliger Verdrehungswinkel des Drehkörpers bezogen auf die Litzenwinkel des Drahtseiles im Schmierungsbereich feststellbar ist, drehbar gelagert ist, welcher Halteteil eine Pumpe oder Steuereinheit mit einem Zahnrad, welches mit der Zahnscheibe des Drehkörpers mittels einer Zahn- oder Rollenkette wirkverbunden ist, trägt , wobei die Steuereinheit mindestens eine Schmiermittelzuleitung und angeschlossene Schmiermitteldruckleitungen mit Düsen aufweist, welche an Düsenbefestigungen, die mit dem Gehäusekörper verbunden sind, angebracht und auf bestimmte Stellen der Oberfläche des Drahtseiles ausrichtbar sind. Es erfolgt ein Abtasten des Oberflächenprofiles oder einer Litzenflanke, z.B. mittels eines Führungsrades, welches an einem Drehkörper befestigt ist, welcher seinerseits über eine Kette mit einer Pumpe oder Steuereinheit in Wirkverbindung steht. Der mit der Drahtseilbewegung rotierende Drehkörper weist lediglich eine über eine Kette gesteuerte Pump- und /oder Steuerfunktion auf und wirkt selbst nicht als Schmiermittelzuführungselement zum Drahtseil, wodurch keinerlei aufwendige und gegebenenfalls störungsanfällige Dichtungen erforderlich sind und hohe Drücke im Schmiermittel leicht verwendet werden können. Unter den Düsen bewegen sich auf Grund des Schlagwinkels die Litzenzwickel des Drahtseiles mit einer Tangentialkomponente, d.h. sie befinden sich zeitweise im Auftreffbereich des Schmiermittelstrahles, wobei diese Lage mit einer bestimmten Winkelstellung des Drehkörpers in einem festen Zusammenhand steht, welche für eine Steuerung der Strahlausbildung genutzt wird. Mit einer derartigen Einrichtung sind in vorteilhafter Weise mit hohen Drücken Schmiermittelstrahlen auf bestimmte Stellen der Drahtseiloberfläche genau ausrichtbar.

Wenn der teilbare Drehkörper das Drahtseil umgebende Gleitteile und äußere, eine Zahnscheibe bildende Zylinderteile aufweist, an welchen stimseitig auskragend zumindest eine Radhalterung mit einem mittels Befestigung drehbar gelagerten Führungsrad angeordnet ist, können die Reibung und der Verschleiß verringert und eine vorteilhafte kompakte und sichere Bauform erreicht werden.

Um eine verspannungsfreie leichte Drehbarkeit zu bewirken, ist von Vorteil, wenn die Lagerung des Drehkörpers im Halteteil durch mindestens ein teilbares Loslager und höchstens ein teilbares Führungslager zur achsialen Abstützung ausgeführt ist.

Wenn gemäß einer weiteren bevorzugten Form die Düsen in einer im wesentlichen senkrechten Richtung auf die Achse des Drahtseiles zu und von dessen Oberfläche bewegbar sind und die Bewegung der Düse(en) in Abhängigkeit von der Lage eines zugeordneten Litzenzwickels steuerbar ist, werden besonders gute Ergebnisse der Drahtseilschmierung bei hoher Wirtschaftlichkeit und geringem Schmiermittelverbrauch erzielt.

Alternativ kann erfindungsgemäß als Sensor ein berührungslos arbeitendes elektronisches oder optoelektronisches Mittel eingesetzt sein, wobei der Sensor und die Steuereinheit durch Meß- bzw. Steuerleitungen mit einer programmierbaren Rechen- und Steuerungseinheit verbunden sind.

Diese Ausführungsform der Erfindung bringt den Vorteil mit sich, daß im wesentlichen eine vollelektronische Messung und Steuerung einer vorteilhaften Drahtseilschmierung ermöglicht ist, wobei auch gegebenenfalls Seilfehler, z.B. Drahtbrüche, festgestellt werden können. Weiters kann die elektronische Rechen- und Steuereinheit bei einer Ortung durch den Sensor, beispielsweise bei Herannahen von Stellen mit vergrößertem Querschnitt am Seil, z.B. Spleißknoten und dergleichen, weitere Steuersignale, z.B. für den Seilantrieb, für eine Seilbremsung. für ein Abheben der Schmiervorrichtung oder dergleichen bereitstellen.

Wenn gemäß einer bevorzugten Form die Düsen an verschiebbaren Düsenhalterungen angebracht sind, die ihrerseits mit jeweils einem am Halteteil befestigten Stellmotor, insbesondere mechanisch gekoppelt sind und jeder Stellmotor über eine Steuerleitung mit der programmierbaren elektronischen Rechen- und Steuerungseinheit verbunden ist, sind besonders wirkungsvolle und genaue Schmiermitteldosierungen, insbesondere mit erwärmten und dadurch dünnflüssig erhaltenen Schmierstoffen, möglich.

Im folgenden wird die Erfindung anhand von lediglich einen Ausführungsweg darstellenden Zeichnungen näher erläutert.

Es zeigen schematisch

Fig. 1 eine Vorrichtung zur Schmierung von Drahtseilen in Längsrichtung, teilweise im Schnitt.
Fig. 2 den Querschnitt eines Litzenseiles mit Führungsrollen
Fig. 3 den Querschnitt eines Litztenseiles mit Schmiermitteldüsen
Fig. 4 eine elektronisch gesteuerte Vorrichtung zum Schmieren von Drahtseilen in Längsrichtung
Fig. 5 eine Anordnung einer Vorrichtung im Bereich einer Drahtseilumlenkscheibe

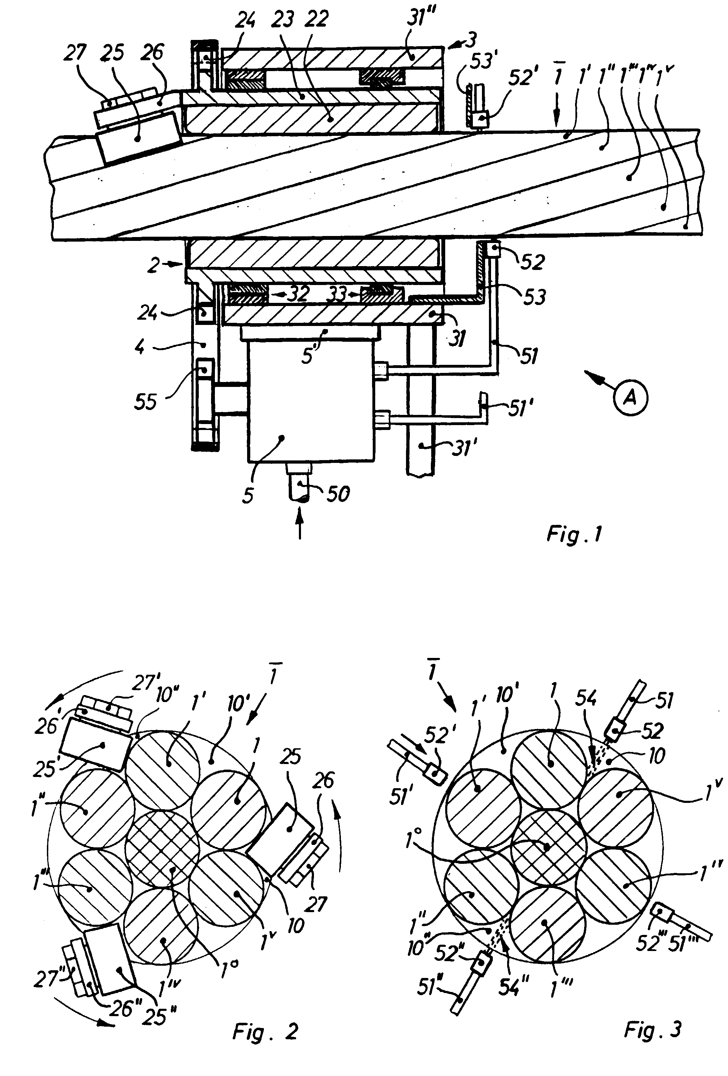

Bei der in Fig. 1 dargestellten Vorrichtung ist um ein aus Litzen $1'$, $1''$, $1'''$, $1^{IV}$, $1^{V}$ gebildetes Drahtseil $\overline{1}$ ein Drehkörper 2 angeordnet. Der Drehkörper 2 ist geteilt ausgeführt und weist in Seilnähe Gleitteile 22 auf, welche eine Zentrierung bzw. Führung der Vorrichtung am Seil bewirken. Die Gleitteile 22 sind in zylinderteilen 23 befestigt, die lösbar miteinander verbunden sind und an einer Stelle eine Zahnscheibe 24 bilden. Ein Führungsrad 25, welches durch eine Befestigung 27 auf einer als Teil eines Zylinderteiles 23 ausgebildeten Radhalterung 26 drehbar gelagert ist, liegt an einer Flanke einer Litze an. Der Drehkörper 2 befindet sich in einem Gehäuse oder Halteteil 3 und wird mittels eines Loslagers 32 und eines Führungslagers 33 in einem Gehäusekörper 31 mit Gehäusedeckel 31'' gehalten. Die miteinander lösbar verbundenen Gehäuseteile 31, 31'' selbst werden mittels einer Halterung 31' fixiert. Eine Pumpe oder Steuereinheit 5 ist am Gehäusekörper 31 befestigt, wobei eine Befestigung 5' verschiebbar oder schwenkbar ist und als ein Kettenspannelement dienen kann. Ein Zahnrad 55 der Pumpe oder Steuereinheit 5 steht über eine Zahnkette oder Rollenkette 4 mit der Zahnscheibe 24 des Drehkörpers 2 in Verbindung und kann von diesem in eine Drehbewegung versetzt werden. Durch eine Schmiermittelzuführung 50 gelangt Schmiermittel in die Pumpe oder Steuereinheit 5 und wird, gesteuert von der Position des Führungsrades 25, einer entsprechend über einem Litzenzwickel befindlichen Düse 52 über eine Schmiermitteldruckleitung 51 zugeleitet. Die Düsen 52, 52' werden durch Düsenbefestigungen 53, 53' gehalten und können gegebenenfalls in Richtung der Oberfläche des Drahtseiles $\overline{1}$ hin und her bewegt werden.

In Fig. 2 ist ein Querschnitt eines Drahtseiles $\overline{1}$ bestehend aus einem Kern $1°$ und um diesen spiralig angeordnete Litzen 1, $1'$, $1''$, $1'''$, $1^{IV}$, $1^{V}$ dargestellt. In den Litzenzwickel 10, 10'' der zwischen den Litzen $1^{V}$, 1, $1'$, $1''$ und $1'''$, $1^{IV}$ befinden sich jeweils an einer Litzenflanke abgestützt Führungsräder 25, 25', 25".

Fig. 3 zeigt ebenfalls einen Querschnitt eines Drahtseiles mit an Schmiermitteldruckleitungen 51, 51', 51", 51"' angebrachten Düsen 52, 52', 52", 52"'. Dabei werden bei Erreichen einer Position der Düsen 52, 52" über einem Litzenzwickel 10, 10' Schmiermittelstrahlen 54, 54" gebildet. die Düsen können auch in Richtung Seilachse verschiebbar ausgeführt sein.

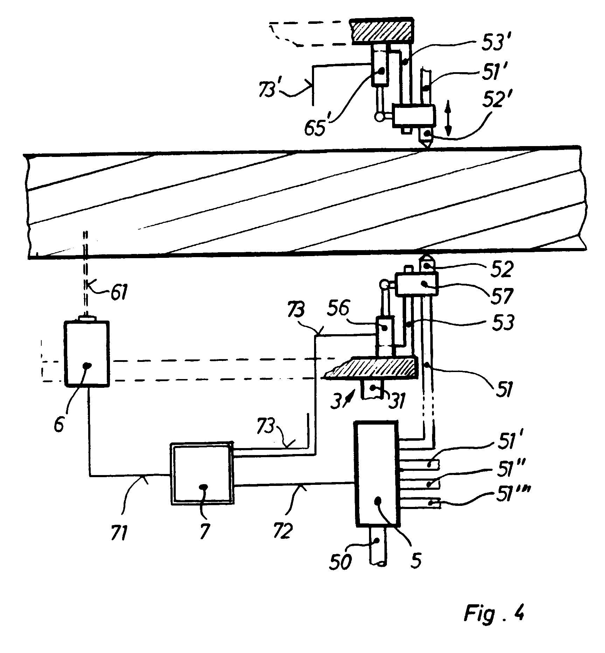

In Fig. 4 ist eine elektronisch gesteuerte Seilschmiervorrichtung dargestellt. Für eine Feststellung der Lage eines Litzenzwickels 10 an einem Litzendrahtseil 1 werden von einem Sensor 6 Sensorstrahlen 61 auf die Drahtoberfläche gerichtet und Meßsignale über eine elektrische Leitung 71 an eine programmierbare elektronische Rechen- und Steuerungseinheit 7 weitergegeben und in dieser verarbeitet. Von dieser Einheit 7 erfolgt über Steuerleitungen 72 eine Steuerung einer Pumpe oder Steuereinheit 5 für ein entsprechendes Zuordnen von Schmiermittel. Dieses wird von der Schmiermittelzuführung 50 in jene Schmiermitteldruckleitung 51. 51', 51", 51"' weitergegeben, deren Düse 52, 52' sich über einem Litzenzwickel 10, 10' befindet. Wenn die Düsen an Düsenbefestigungen 53 mittels verschiebbarer Düsenhalterungen 57 angebracht sind, können diese mittels Stellmotoren 56, die über Steuerleitungen 73 mit der programmierbaren elektronischen Rechen- und Steuerungseinheit verbunden sind, radial bewegt werden.

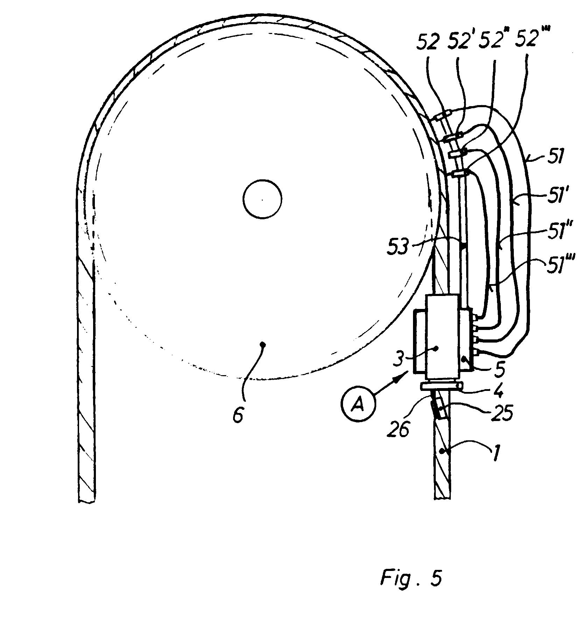

Fig. 5 zeigt eine Seilschmiereinrichtung A im Bereich einer Umlenkung eines Drahtseiles $\bar{1}$ um eine Seilscheibe 6. Die Lage einer Litzenflanke wird dabei von einem Führungsrad 25 im geraden Bereich eines Seiles $\bar{1}$ abgetastet. Damit wird eine Schmiermittelzuführung zu einer im Seilbogenbereich liegenden Düse 52, 52', 52", 52"' bewirk, welche über einem Litzenzwickel 10 der durch die Seilbiegung besonders geöffnet ist, liegt. Es versteht sich von selbst. daß dafür auch eine elektronisch gesteuerte Seilschmiereinrichtung verwendbar ist.

## Patentansprüche

1. Verfahren zur Schmierung von Drahtseilen ($\bar{1}$), bestehend aus mehreren, im wesentlichen einen gerundeten oder kreisförmigen Querschnitt aufweisenden, vorzugsweise aus mehreren Drähten gebildeten Litzen ( 1, 1', 1", 1"', $1^{IV}$, $1^{V}$), die in Längsrichtung schraubenförmig einander benachbart unter Ausbildung von oberflächennahen Litzenzwickeln ( 10, 10') um einen Kern (1°) angeordnet sind, bei welchem Verfahren das Drahtseil (7) in einem Schmierungsbereich in Längsrichtung relativ zu diesem bewegt und mit einem Schmiermittel beaufschlagt wird, dadurch gekennzeichnet, daß im Schmierungsbereich die Oberfläche des sich bewegenden Drahtseiles ($\bar{1}$) örtlich durch mehrere , geringe Durchmesser aufweisende, diskontinuierlich sprühende bzw. ausgebildete Schmiermittelstrahlen (54, 54') mit Schmiermittel beaufschlagt wird, wobei die Beaufschlagung derart gesteuert wird, daß nur dann Schmiermittelstrahlen ( 54, 54'), welche eine hohe kinetische Energie aufweisen, ausgebildet bzw. aktiviert werden, wenn deren Auftreffpunkt oder deren Auftrefflinie im Bereich eines Spaltes zwischen benachbarten Litzen im Litzenzwickel (10, 10', 10") am bewegten Drahtseil ($\bar{1}$) zu liegen kommt.

2. Verfahren nach Anspruch 1, dadurch gekennzeichnet, daß zur Steuerung der Zeitpunkte einer Ausbildung und einer Abschaltung der Schmiermittelstrahlen ( 54, 54") am bewegten Drahtseil ($\bar{1}$) in einer Meßebene im wesentlichen quer zur Seilachse durch Vermessen oder Abtasten des Oberflächenprofiles, einer Litzenflanke oder dergleichen Kennmarken die jeweils momentane Lage mindestens eines Litzenzwickels ( 10, 10', 10") festgestellt und damit unter Berücksichtigung der Seilgeometrie, insbesondere des Schlagwinkels, und der Anzahl der Litzen (1, 1', 1", 1"') sowie gegebenenfalls des Abstandes zur Meßebene die jeweils gegebene Lage der größten Annäherung der Litzen des Drahtseiles im Schmierungsbereich ermittelt werden, wobei jene Schmiermittelstrahlen ( 54, 54") ausgebildet bzw. aktiviert werden, deren Auftreffpunkt im, durch Seilbewegung und den Schlagwinkel relativ zu diesem bewegten, Litzenzwickel ( 10, 10') zu liegen kommt.

3. Verfahren nach Anspruch 1 oder 2, dadurch gekennzeichnet, daß die Meßebene mit einem Abstand zum Schmiermittelbereich, insbesondere diesem in Richtung der Drahtseilbewegung vorgeordnet wird.

4. Verfahren nach einem der Ansprüche 1 bis 3, dadurch gekennzeichnet, daß weitgehend zylindrische Schmiermittelstrahlen ( 54, 54"), vorzugsweise mit einem Druck von größer als 25 bar, gebildet werden.

5. Verfahren nach einem der Ansprüche 1 bis 4, dadurch gekennzeichnet, daß die zur Erstellung des Schmiermittelstrahles ( 54, 54") verwendeten Düsen (52) von einer Ruheposition jeweils zur oder bei Ausbildung des Strahles in den Litzenzwickel ( 10, 10') hinein bewegt bzw. dem Bereich der größten Annäherung der Litzen angenähert werden.

6. Verfahren nach einem der Ansprüche 1 bis 5, dadurch gekennzeichnet, daß ein Schmiermittel mit einem Tropfpunkt von höher als 40 °C, vorzugsweise von höher als 60 °C, verwendet und vor dem Einsatz auf eine um mindestens 15 °C, insbesondere um etwa 35 °C, über der Tropfpunkttemperatur liegende Temperatur erwärmt und für eine Erstellung dünnflüssiger Schmierstrahlen benutzt wird.

7. Verfahren nach einem der Ansprüche 1 bis 6, dadurch gekennzeichnet, daß ein Abtasten des Oberflächenprofiles, insbesondere mindestens einer Litzenflanke, in der Meßebene mechanisch durchgeführt wird und daß eine Schmiermittelstrahl-Bildung und/oder eine Steuerung (5) der Ausbildung von Schmiermittelstrahlen ( 54, 54") von der Bewegung der(des) Tastmittel(s) ( 25, 25', 25", 61) bewerkstelligt werden(wird).

8. Verfahren nach einem der Ansprüche 1 bis 6, dadurch gekennzeichnet, daß die Vermessung des Oberflächenprofiles zur Bestimmung der jeweiligen Lage mindestens eines Litzenzwickels ( 10, 10', 10") in der Meßebene durch Sensoren (6), beispielsweise einen Radar- oder optoelektronischen Sensor, bewerkstelligt wird und die Signale einer programmierbaren elektronischen Rechen- und Steuereinheit (7) zugeführt werden, durch welche die Ausbildung von Schmiermittelstrahlen ( 54, 54") und gegebenenfalls eine Düsenbewegung gesteuert wird.

9. Vorrichtung zum Schmieren von Drahtseilen ($\overline{1}$) bestehend aus mehreren, im wesentlichen einen gerundeten oder kreisförmigen Querschnitt aufweisenden vorzugsweise aus mehreren Drähten gebildeten Litzen (1,1',1",1''',1$^{IV}$,1$^{V}$), die in Längsrichtung schraubenförmig aneinander anliegend unter Ausbildung von oberflächennahen Litzenzwickeln (10,10') um einen Kern (1°) angeordnet sind, welche Vorrichtung, das Drahtseil ($\overline{1}$) umschließend, in Längsrichtung des Seiles relativ zu diesem bewegbar ist und Einrichtungen zur Beaufschlagung der Drahtseiloberfläche mit Schmiermittel aufweist, insbesondere zur Durchführung des Verfahrens nach den Ansprüchen 1 bis 8, wobei im Bereich des Drahtseiles ($\overline{1}$) ein Halteteil (3) mittels einer Halterung (31) feststellbar angeordnet ist, dadurch gekennzeichnet, daß welches Halteteil (3) Düsenbefestigungen (53) mit Düsen (52) trägt, die über Schmiermitteldruckleitungen (51, 51', 51", 51''') mit einer für eine jeweilige Schmiermittelbeaufschlagung geeignete Steuereinheit (5,7) verbunden sind und in einem Abstand, bezogen auf die Bewegungsrichtung des Seiles, dem Schmierungsbereich ein Sensor (25,6) zur Vermessung mindestens eines Teiles des jeweiligen Oberflächenprofiles am bewegten Drahseil ($\overline{1}$) vorgeordnet ist, wobei der Sensor (25,6) und die Steuereinheit (5,7) verbunden sind.

10. Vorrichtung nach Anspruch 9, dadurch gekennzeichnet, daß das Halteteil (3) als Gehäuse ausgebildet ist, in welchem um das Drahtseil ($\overline{1}$) ein teilbarer Drehkörper (2) mit einer Zahnscheibe (24) und mit mindestens einem an mindestens einer Litze (1) anlegbaren Führungsrad (25), wodurch ein jeweiliger Verdrehungswinkel des Drehkörpers (2) bezogen auf die Litzenzwickel (10) des Drahtseiles ($\overline{1}$) im Schmierungsbereich feststellbar ist, drehbar gelagert ist, welcher Halteteil (3) eine Pumpe oder Steuereinheit (5) mit einem Zahnrad (55) , welches mit der Zahnscheibe (24) des Drehkörpers (2) mittels einer Zahn- oder Rollenkette (4) wirkverbunden ist, trägt, wobei die Steuereinheit (5) mindestens eine Schmiermittelzuleitung (50) und angeschlossene Schmiermitteldruckleitungen (51) mit Düsen (52) aufweist, welche an Düsenbefestigungen (53), die mit dem Gehäusekörper (31) verbunden sind, angebracht und auf bestimmte Stellen der Oberfläche des Drahtseiles ausrichtbar sind.

11. Vorrichtung nach Anspruch 9 oder 10, dadurch gekennzeichnet, daß der teilbare Drehkörper (2) das Drahtseil ($\overline{1}$) umgebende Gleitteile (23) und äußere, eine Zahnscheibe (24) bildende Zylinderteile (23) aufweist, an welchen stirnseitig auskragend zumindest eine Radhalterung (26) mit einem mittels Befestigung (27) drehbar gelagerten Führungsrad (25) angeordnet ist.

12. Vorrichtung nach Anspruch 9 bis 11, dadurch gekennzeichnet, daß die Lagerung des Drehkörpers (2) im Halteteil (3) durch mindestens ein teilbares Loslager und höchstens ein teilbares Führungslager zur achsialen Abstützung ausgeführt ist.

13. Vorrichtung nach Anspruch 9 bis 12, dadurch gekennzeichnet, daß die Düsen (52) in einer im wesentlichen senkrechten Richtung auf die Achse des Drahtseiles ($\overline{1}$) zur und von dessen Oberfläche bewegbar sind und die Bewegung der Düse(n) in Abhängigkeit von der Lage eines zugeordneten Litzenzwickels (10) steuerbar ist.

14. Vorrichtung nach Anspruch 9 oder 13, dadurch gekennzeichnet, daß als Sensor (6) ein berührungslos arbeitendes elektronisches Mittel eingesetzt ist, wobei der Sensor (6) und die Steuereinheit (5) durch Meß- bzw. Steuerleitungen (71,72) mit einer programmierbaren elektronischen Rechen- und Steuerungseinheit (7) verbunden sind.

15. Vorrichtung nach Anspruch 14, dadurch gekennzeichnet, daß die Düsen (52) an verschiebbaren Düsenhalterungen (57) angebracht sind, die ihrerseits mit jeweils einem am Halteteil (3) befestigten Stellmotor (56) insbesondere mechanisch gekoppelt sind und jeder Stellmotor (56) über eine Steuerleitung (73) mit der programmierbare elektronischen Rechen- und Steuerungseinheit (7) verbunden ist.

## Claims

1. A method for lubricating wire ropes ($\bar{1}$), consisting of a plurality of strands (1,1',1", 1"', 1$^{IV}$, 1$^{V}$) of essentially rounded or circular cross section and preferably composed of several wires disposed in longitudinal direction helically adjacent with formation of surface-near strand gussets (10, 10') around a core (1°), in which method the wire rope (7) is moved in a lubricating area in longitudinal direction in relation to it while a lubricant is applied to it, characterized in that in the lubricating area, the surface of the moving wire rope ($\bar{1}$) is locally exposed to lubricant by several discontinuously spraying or formed lubricant jets (54, 54') of small diameter, the applicating exposure being controlled in such a manner that lubricant jets (54, 54') of high kinetic energy are formed or activated only if their impact point or impact line is located in the area of a gap betwen adjacent strands in the strand gusset (10, 10',10") on the moved wire rope ($\bar{1}$).

2. The method according to claim 1, characterized in that for controlling the points of time of forming and cutting off the lubricant jets (54, 54") on the moving wire rope ($\bar{1}$), the respective momentary position of at least one strand gusset (10, 10', 10") is determined in a measuring plane substantially transversally to the rope axis by measuring or scanning the surface profile of a strand flank or the like points of orientation and thus the respective given position of the closest approach of the strands of the wire rope in the luoicating area is determined with consideration of the rope geometry, in particular the angle of lay and the number of strands (1, 1', 1", 1"') and optionally the distance to the measuring plane, with those lubricant jets (54, 54") being formed or activated whose impact point is located in the strand gusset (10, 10') moved by moving the rope and the angle of lay in relation thereto.

3. The method according to claim 1 or 2, characterized in that the measuring plane is disposed upstream at a distance to the lubricating area, in particular in the moving direction of the wire rope.

4. The method according to any one of the claims 1 to 3, characterized in that mainly cylindrical lubricant jets (54, 54") preferably at a pressure of more than 25 bar are formed.

5. The method according to any one of the claims 1 to 4, characterized in that the nozzles (54) used for generating the lubricant jets (54, 54") are moved from an inactive position for or at forming the jet into the strand gusset (10, 10') or approached to the area of closest approach of the strands.

6. The method according to any one of the claims 1 to 5, characterized in that a lubricant of a dripping point of more that 40°C, preferably of more than 60°C, is used and heated prior to use to a temperature by at least 15°C, in particular by about 35°C, higher than the dripping point temperature and used for forming thin-bodied lubricant jets.

7. The method according to any one of the claims 1 to 6, characterized in that scanning of the surface profile, in particular of at least one strand flank, in the measuring plane is effected mechanically and that the forming of lubricant jets and/or control (5) of forming of lubricant jets (54, 54") is effected by the movement of the scanning means (25, 25', 25", 61).

8. The method according to any one of the claims 1 to 6, characterized in that measuring the surface profile for determining the respective position of at least one strand gusset (10, 10', 10") is effected in the measuring plane by sensors (6), for instance a radar or opto-electronic sensor and that the signals are fed to a programmable electronic computing and control unit (7) controlling the generating of lubricant jets (54, 54") and optionally a movement of the nozzles.

9. A device for lubricating wire ropes ($\bar{1}$) consisting of a plurality of strands (1, 1', 1", 1"', 1$^{IV}$, 1$^{V}$) of essentially rounded or circular cross section and preferably composed of several wires disposed in longitudial direction mutually helically adjacent with formation of surface-near strand gussets (10, 10') around a core (1°), which device enclosing the wire rope ($\bar{1}$) is movable in relation to it in longitudinal direction of the rope and provided with means for applying lubricant to the wire rope surface, in particular for carrying out the method according to any one of the claims 1 to 8, a mounting element (3) lockable by means of a mounting (31) being provided in the area of the wire rope ($\bar{1}$), characterized in that said mounting element (3) carries nozzle supports (53) with nozzles (52) connected via lubricant pressure lines (51, 51', 51", 51"') to a control unit (5,7) suitable for respective lubricant applications, a sensor (25, 6) being disposed upstream of the lubricating area spacially in relation to the moving direction of the rope for measuring at least a portion of the respective surface profile on the moving wire rope ($\bar{1}$), the sensor (25,6) and the control unit (5,7) being connected.

10. The device according to claim 9, characterized in that the mounting element (3) is formed as a housing in which a divisible rotating body (2) is rotably supported around the wire rope ($\bar{1}$) by means of a toothed disk (24) and at least one guide wheel (25) applicable to at least one strand (1), thereby permitting the determination of a respective twisting angle of the rotating body (2) in relation to the strand gussets (10) of the wire rope ($\overline{1}$) in the lubricating area, which mounting element (3) carries a pump or control unit (5) with a gearwheel (55) operatively connected to the toothed disk (24) of the rotating body (2) by means of a toothed chain or roller chain (4), the control unit (5) having at least one lubricant feeding line (50) and connected lubricant pressure lines (51) with nozzles (52) attached to nozzle supports (53) connected to the housing body (31) and alignable to certain spots of the surface of the wire rope.

11. The device according to claim 9 or 10, characterized in that the divisible rotating body (2) has gliding parts (23) encircling the wire rope ($\overline{1}$) and outer cylinder parts (23) forming a toothed disk (24), the front face of said cylinder parts being provided projectingly with at least one wheel support (26) having a guide wheel (25) rotably supported by means of a fixing (27).

12. The device according to any one of the claims 9 to 11, characterized in that the support of the rotating body (2) in the mounting element (3) is effected by means of at least one divisible movable bearing and at most one divisible guide bearing for axial support.

13. The device according to any one of the claims 9 to 12, characterized in that the nozzles (52) are movable in a direction substantially vertical to the axis of the wire rope ($\overline{1}$) to and from its surface and that the movement of the nozzle(s) is controllable as a function of the position of an associated strand gusset (10).

14. The device according to claim 9 or 13, characterized in that a non-contact electronic means is used as a sensor (6), the sensor (6) and the control unit (5) being connected by measuring or control lines (71, 72) to a programmable electronic computing and control unit (7).

15. The device according to claim 14, characterized in that the nozzles (52) are attached to displaceable nozzle supports (57) which in turn are in particular mechanically coupled to one each servomotor (56) attached to the mounting element (3) and that each servomotor (56) is connected to the programmable electronic computing and control unit (7) via a control line (73).

**Revendications**

1. Procédé pour le graissage de câbles en fils métalliques ($\overline{1}$), constitués de plusieurs torons (1, 1', 1", 1"', $1^{iv}$, $1^{v}$) qui ont essentiellement une section transversale arrondie ou circulaire et sont de préférence formés de plusieurs fils métalliques et qui sont disposés l'un à côté de l'autre, d'une manière hélicoïdale suivant la direction longitudinale autour d'une âme (1°) en formant des espaces triangulaires inter-torons (10, 10') voisins de la surface, procédé selon lequel le câble en fils métalliques (7) est déplacé dans une zone de graissage suivant une direction longitudinale vis-à-vis de cette zone et est soumis à l'application d'un lubrifiant, caractérisé en ce que, dans la zone de graissage, la surface du câble en fils métalliques ($\overline{1}$) en déplacement est soumise localement à une application de lubrifiant au moyen de plusieurs jets de lubrifiant (54, 54') projetés ou formés d'une manière discontinue et présentant de faibles diamètres, l'application étant commandée de façon que des jets de lubrifiant (54, 54') qui possèdent une énergie cinétique élevée ne sont formés ou activés que lorsque leur point d'incidence ou leur ligne d'incidence vient se placer dans la zone d'un intervalle séparant des torons voisins dans l'espace triangulaire inter-torons (10, 10', 10") sur le câble en fils métalliques ($\overline{1}$) déplacé.

2. Procédé selon la revendication 1, caractérisé en ce que, pour commander les instants d'une formation et d'une interruption des jets de lubrifiant (54, 54"), la position momentanée d'au moins un espace triangulaire inter-torons (10, 10', 10") est déterminée sur le câble en fils métalliques ($\overline{1}$) déplacé, dans un plan de mesure essentiellement transversal vis-à-vis de l'axe du câble, au moyen de la réalisation de mesures sur la forme profilée de surface ou d'un balayage de celle-ci, d'un flanc de toron ou d'éléments caractéristiques analogues, et donc, en tenant compte de la géométrie du câble, notamment de l'angle de commettage et du nombre des torons (1, 1', 1", 1"'), ainsi qu'éventuellement de la distance au plan de mesure, la position chaque fois donnée de la plus grande proximité des torons du câble en fils métalliques dans la zone de graissage est établie, les jets de lubrifiant (54, 54") étant formés ou activés dont le point d'incidence vient se placer dans l'espace triangulaire inter-torons (10, 10') déplacé vis-à-vis de lui par le mouvement du câble et l'angle de commettage.

3. Procédé selon la revendication 1 ou 2, caractérisé en ce que le plan de mesure est disposé à une certaine distance de la zone de graissage, notamment en amont de cette zone suivant la direction du déplacement du câble en fils métalliques.

4. Procédé selon l'une des revendications 1 à 3, caractérisé en ce que des jets de lubrifiant (54, 54") dans une large mesure cylindriques sont formés, de préférence sous une pression supérieure à 25 bars.

**5.** Procédé selon l'une des revendications 1 à 4, caractérisé en ce que les buses (52) utilisées pour produire le jet de lubrifiant (54, 54") sont déplacées chacune d'une position de repos jusqu'à l'espace triangulaire inter-torons (10, 10') ou, lorsque le jet est formé, dans cet espace triangulaire, ou sont rapprochées de la zone de plus grande proximité des torons.

**6.** Procédé selon l'une des revendications 1 à 5, caractérisé en ce qu'un lubrifiant présentant un point de goutte supérieur à 40°C, de préférence supérieur à 60°C, est utilisé et en ce qu'avant l'utilisation, sa température est élevée à une température située à au moins 15°C, notamment à environ 35°C, au-dessus de la température du point de goutte et il est utilisé pour la réalisation de jets de lubrifiant fluides.

**7.** Procédé selon l'une des revendications 1 à 6, caractérisé en ce qu'un balayage du profil de surface, notamment d'au moins un flanc de toron, est exécuté mécaniquement dans le plan de mesure et en ce qu'une formation de jets de lubrifiant et/ou une commande (5) de la formation de jets de lubrifiant (54, 54") est ou sont assurées par le déplacement du ou des moyens de balayage (25, 25', 25", 61).

**8.** Procédé selon l'une des revendications 1 à 6, caractérisé en ce que la mesure du profil de surface est assurée, en vue de déterminer la position momentanée d'au moins un espace triangulaire inter-torons (10, 10', 10") dans le plan de mesure, au moyen de capteurs (6), par exemple d'un capteur radar ou opto-électronique et en ce que les signaux sont envoyés à une unité électronique programmable de calcul et de commande (7) au moyen de laquelle la formation de jets de lubrifiant (54, 54") et éventuellement un mouvement des buses sont commandés.

**9.** Dispositif pour le graissage de câbles en fils métalliques ($\overline{1}$), constitués de plusieurs torons (1, 1', 1", 1"', 1$^{iv}$, 1$^v$) qui ont essentiellement une section transversale arrondie ou circulaire et sont de préférence formés de plusieurs fils métalliques et qui sont disposés l'un à côté de l'autre, d'une manière hélicoïdale suivant la direction longitudinale autour d'une âme (1°) en formant des espaces triangulaires inter-torons (10, 10') voisins de la surface, lequel dispositif est agencé de façon à pouvoir être déplacé vis-à-vis du câble en fils métalliques ($\overline{1}$) en entourant ce câble et suivant la direction longitudinale de ce dernier et comporte des dispositifs servant à soumettre la surface du câble en fils métalliques à l'application d'un lubrifiant, notamment pour la mise en oeuvre du procédé selon les revendications 1 à 8, une pièce de support (3) étant disposée dans la zone du câble en fils métalliques (`1) de façon à pouvoir être immobilisée au moyen d'un support (31X), caractérisé en ce que la pièce de support (3) porte des fixations de buse (53) comportant des buses (52) qui sont reliées par des tuyauteries de refoulement de lubrifiant (51, 51', 51", 51"') à une unité de commande (5, 7) apte à réaliser à chaque instant une application de lubrifiant et en ce qu'un capteur (25, 6) servant à réaliser des mesures sur au moins une partie du profil de surface momentané sur le câble en fils métalliques ($\overline{1}$) déplacé est disposé en amont de la zone de graissage à une certaine distance suivant la direction de déplacement du câble, le capteur (25, 6) et l'unité de commande (5, 7) étant reliés.

**10.** Dispositif selon la revendication 9, caractérisé en ce que la partie de support (3) est réalisée sous forme d'un boîtier dans lequel un corps rotatif (2) agencé de façon à pouvoir être divisé en plusieurs parties est monté d'une manière rotative autour du câble en fils métalliques ($\overline{1}$), le corps rotatif (2) comportant un disque denté (24) et au moins une roue de guidage (25) qui est agencée de façon à pouvoir être appliquée sur au moins un toron (1) et au moyen de laquelle un angle de position angulaire momentanée du corps rotatif (2) vis-à-vis de l'espace triangulaire inter-torons (10) du câble en fils métalliques ($\overline{1}$) peut être déterminé dans la zone de graissage, la partie de support (3) portant une pompe ou une unité de commande (5) comportant une roue dentée (55) qui coopère avec le disque denté (24) du corps rotatif (2) au moyen d'une chaîne à dents ou d'une chaîne à rouleaux (4), l'unité de commande (5) comportant au moins une tuyauterie d'amenée de lubrifiant (50) et, raccordées à cette unité, des tuyauteries de refoulement de lubrifiant (51) comportant des buses (52) qui sont montées sur des fixations de buse (53) solidaires du corps (31) du boîtier et qui sont agencées de façon à pouvoir être orientées vers des emplacements déterminés de la surface du câble en fils métalliques.

**11.** Dispositif selon la revendication 9 ou 10, caractérisé en ce que le corps rotatif (2) agencé de façon à pouvoir être divisé en plusieurs parties comprend des pièces glissantes (22) entourant le câble en fils métalliques (1) et des pièces cylindriques extérieures (23) qui forment un disque denté (24) et sur lesquelles est disposé, en porte-à-faux du côté frontal, au moins un support de roue (26) comportant une roue de guidage (25) montée rotative au moyen d'une fixation (27).

**12.** Dispositif selon l'une des revendications 9 à 11, caractérisé en ce que le montage à palier du corps rotatif (2) dans la partie de support (3) est réalisé au moyen d'au moins un palier libre agencé de façon à pouvoir être divisé en plusieurs parties et d'au plus un palier de guidage agencé de façon à pouvoir être divisé en plusieurs parties en vue de l'appui axial.

13. Dispositif selon l'une des revendications 9 à 12, caractérisé en ce que les buses (52) sont agencées de façon à pouvoir être déplacées suivant une direction essentiellement perpendiculaire à l'axe du câble en fils métalliques ($\bar{1}$) vers la surface de ce câble et dans le sens s'éloignant de cette surface et le mouvement de la ou des buses peut être commandé en fonction de la position d'un espace triangulaire inter-torons (10) associé.

14. Dispositif selon la revendication 9 ou 13, caractérisé en ce qu'un moyen électronique fonctionnant sans contact est utilisé en tant que capteur (6), le capteur (6) et l'unité de commande (5) étant reliés au moyen de lignes de mesure et de commande (71, 72) à une unité électronique programmable de calcul et de commande (7).

15. Dispositif selon la revendication 14, caractérisé en ce que les buses (52) sont montées sur des supports de buse (57) agencés de façon à pouvoir être déplacés en translation qui sont eux-mêmes accouplés, notamment mécaniquement, chacun à un moteur de positionnement (56) respectif fixé sur la partie de support (3) et en ce que chaque moteur de positionnement (56) est relié par une ligne de commande (73) à l'unité électronique programmable de calcul et de commande (7).

Fig . 1

Fig . 2

Fig . 3

Fig . 4

Fig . 5